# EUROPÄISCHE PATENTSCHRIFT

(11) **EP 0 726 178 B1**
(45) Veröffentlichungstag und Bekanntmachung des Hinweises auf die Patenterteilung: **28.04.1999**
(21) Anmeldenummer: 96101493.3
(22) Anmeldetag: 02.02.1996
(51) Int. Cl.: B60G 17/056

(54) **Luftfederventil mit Feineinstellung**
Valve with fine adjustment for air suspension
Valve pour suspension pneumatique avec ajustement fin

(30) Priorität: 09.02.1995 DE 19504296
(43) Veröffentlichungstag der Anmeldung: 14.08.1996
(73) Patentinhaber: Haldex Brake Products GmbH & Co. KG, 69123 Heidelberg (DE)
(72) Erfinder: Sulzyc, Georg, D-69214 Eppelheim (DE)
(74) Vertreter: Rehberg, Elmar, Dipl.-Ing.

(56) Entgegenhaltungen:
- DE-A- 1 966 636
- DE-A- 4 305 500

## Beschreibung

Die Erfindung bezieht sich auf ein Luftfederventil mit Feineinstellung, insbesondere für Nutzfahrzeuge, mit einem Gehäuse, in dem ein Stößel dichtend verschiebbar geführt ist, der ein Ein/Auslaßventil betätigt, wobei ein lastabhängiger Verstelltrieb mit Hebel, Welle und Exzenternocken um eine Achse verschwenkbar ist und der Verstellung des Stößels dient, und mit mindestens einer auf die Abschlußstellung des Ein/Auslaßventils einstellbaren Gabel zur Festlegung des Hebels in im wesentlichen horizontaler Position, die mit einer Schraube oder Mutter relativ zu einem die Welle umgebenden Gehäuseabschnitt fixierbar ist, und zwar derart, daß die Abschlußstellung des Ein/Auslaßventils einer horizontalen Ausrichtung des Hebels des Verstelltriebes unabhängig vom Beladungszustand des Fahrzeuges zugeordnet ist. Normalerweise besitzen solche Luftfederventile sogar zwei solche absteckbare Stellungen, je nach dem, ob sich der Hebel relativ zum Gehäuse des Luftfederventils nach rechts oder nach links erstreckt, also ob das Luftfederventil auf der rechten oder linken Fahrzeugseite angeordnet wird. Der Absteckstift wird dabei durch einen randoffenen Schlitz einer Gabel hindurchgeführt, wobei die Gabel selbst wiederum verstellbar ist. Mit der Verstellung der Gabel wird die Zuordnung zu der Abschlußstellung des Ein/Auslaßventiles festgelegt und insoweit auch Herstellungstoleranzen ausgeglichen.

Ein Luftfederventil der eingangs beschriebenen Art ist aus der DE 43 05 500 A1 bekannt. Dort bildet der Gehäuseabschnitt, der die Welle des Verstelltriebes umgibt, auf der einen Seite eine feste Gabel, die insoweit nicht einstellbar ist. Zur Zuordnung der Abschlußstellung besitzt das Luftfederventil eine interne Verstelleinrichtung zwischen dem das Ein/Auslaßventil betätigenden Stößel und einem Führungsstück, an dem der Exzenternocken des Verstelltriebes angreift. Auf der anderen Seite des die Welle umgebenden Gehäuseabschnitts des Luftfederventils ist eine einstellbare Gabel vorgesehen. Diese Gabel ist um einen sich radial zur Achse der Welle und damit zur Achse des Gehäuseabschnittes erstreckenden Drehzapfen in einer parallel zur Achse der Welle verlaufenden Ebene verstellbar. Die Gabel umgreift mit ihrem randoffenen Schlitz den Absteckstift. Um nicht nur eine Mittelstellung, in der sich die Verbindungslinie der Gabel zwischen Drehzapfen und Durchbrechung parallel zur Achse der Welle befindet, zuzulassen, sondern auch Schräglagen, ist Spiel zwischen der randoffenen Durchbrechung und dem Absteckstift erforderlich. Dies ermöglicht dann ein Verstellen der Gabel in verschiedene Winkellagen. Beim Einstellen wird eine solche Winkellage ausgesucht, in der sich der Hebel des Verstelltriebes in horizontaler Stellung befindet und die Abschlußstellung des Ein/Auslaßventiles erreicht ist. Infolge dieses notwendigerweise vorhandenen Spiels zwischen der randoffenen Durchbrechung und dem Absteckstift ist die Genauigkeit der Absteckung beeinträchtigt. Da sich je nach der unterschiedlichen Winkellage zwischen Gabel und Absteckstift ein unterschiedliches Spiel ergibt, ergeben sich auch unterschiedliche Ungenauigkeiten in den verschiedenen Absteckpositionen.

Es ist weiterhin ein Luftfederventil bekannt, welches auf eine interne Verstelleinrichtung verzichtet und zwei verstellbare Gabeln für den Links- bzw. Rechtsumschlag an dem Gehäuseabschnitt aufweist, der die Welle des Verstelltriebes führt. Auch diese Gabeln sind um einen Drehzapfen jeweils in vertikalen Ebenen schwenkbar, die sich parallel zur Achse der Welle erstrecken. Damit ist es zwar möglich, die eine Gabel für den Rechtsumschlag des Hebels und die andere Gabel für den Linksumschlag des Hebels getrennt voneinander einzustellen. Infolge des notwendigen Spiels zwischen der randoffenen Durchbrechung jeder Gabel und dem Absteckstift treten auch hier die zuvor beschriebenen Nachteile auf.

Der Erfindung liegt die Aufgabe zugrunde, ein Luftfederventil mit Feineinstellung zu schaffen, bei dem die Genauigkeit der Absteckung in den verschiedenen Winkellagen konstant ist.

Erfindungsgemäß wird dies bei einem Luftfederventil der eingangs beschriebenen Art dadurch erreicht, daß der Gehäuseabschnitt relativ zu der Achse der Welle eine Zylinderfläche aufweist, daß die Gabel eine auf die Zylinderfläche abgestimmte zylindrische Gegenfläche besitzt, und daß die Gabel mit ihrer Gegenfläche an der Zylinderfläche anliegend in unterschiedlichen Winkellagen um die Achse der Welle vermittels der Schraube oder Mutter fixierbar ist.

Die Erfindung geht von dem Gedanken aus, die Gabein nicht mehr in einer etwa vertikalen Ebene um einen Drehzapfen zu verstellen, sondern auf einer Zylinderfläche um die Achse der Welle. Damit tritt der Vorteil ein, daß trotz unterschiedlicher Winkellagen die Relativlage zwischen der eingestellten Gabel und dem Absteckstift konstant bleibt. Dies bedeutet wiederum, daß zwischen der randoffenen Durchbrechung und dem Absteckstift kaum Spiel bestehen muß. Die gegenseitige Dimensionierung kann so eng gewählt werden, daß es lediglich möglich ist, den Absteckstift durch die Durchbrechung nach außen herauszuziehen bzw. von außen nach innen einzusetzen. Es kann hier sogar eine Gleitpassung gewählt werden. Die Genauigkeit der Absteckung in damit in allen Winkellagen konstant. Es versteht sich, daß anstelle einer randoffenen Durchbrechung auch eine randgeschlossene Durchbrechung an der Gabel vorgesehen sein könnte. Eine randgeschlossene Durchbrechung sollte jedoch das axiale Spiel der Welle im Gehäuseabschnitt berücksichtigen. Wenn ein Luftfederventil wahlweise für Rechts- und Linksanwendung geschaffen wird, wird es mit zwei derartigen Gabeln ausgestattet, die beide getrennt voneinander eingestellt werden. Es ergibt sich der Vorteil, daß auf eine interne Verstelleinrichtung verzichtet werden kann, so daß sich die Möglichkeit eröffnet, den Stößel und das mit dem Exzenternocken zusammenarbeitende Führungsstück einteilig auszubilden.

Als Zylinderfläche kann in der einfachsten Form die ohnehin vorhandene Zylinderfläche des Gehäuseabschnitts, der die Welle umgibt, dienen. Es ist aber auch möglich, diesen Gehäuseabschnitt mit einem radial zur Achse nach außen vorstehenden Fortsatz zu versehen und an diesem Fortsatz die Zylinderfläche anzuordnen. Umgekehrt ist es auch möglich, die Zylinderfläche in einer von der Oberfläche des Gehäuseabschnittes radial nach innen einspringenden Vertiefung anzuordnen.

Durch die zylindrische Krümmung der Gabel mit ihrer zylindrischen Gegenfläche und der Zylinderfläche an dem Gehäuseabschnitt tritt bereits eine Führung der Gabel in Umfangsrichtung ein. Ansonsten besitzt die Gabel ein Langloch für den Durchtritt der Schraube oder eines Schraubenschaftes, der mit einer Mutter zusammenarbeitet, um die eingestellte Winkellage zu fixieren.

Dieser Langlochschlitz stellt eine gewisse Führung der Gabel in Umfangsrichtung sicher. Es ist aber auch möglich, daß die Gabel zusätzliche oder weitere gesonderte Führungsflächen aufweist, die sich radial in Umfangsrichtung um die Achse erstrecken. So kann die Gabel hier Abkantungen aufweisen, die mit entsprechenden Gegenflächen an dem Vorsprung oder der Vertiefung zusammenarbeiten, damit die Gabel auf der Zylinderfläche um die Achse der Welle ausgerichtet geführt ist. Die Gabel besitzt aber in jedem Fall ein parallel zu den Führungsflächen verlaufendes Langloch.

Es ist vorteilhaft möglich, daß zur Fixierung der Gabel in den verschiedenen Winkellagen eine Schraube ist, die einen radial nach innen reichenden Fortsatz besitzt. In Verbindung damit weist die um die Achse verschwenkbare Welle eine umlaufende Nut auf, wobei die Schraube mit ihrem Fortsatz in diese Nut eingreift und auf diese Weise die Welle in axialer Richtung in ihrem Gehäuseabschnitt festgelegt ist. Die Schraube erfüllt damit eine Doppelfunktion.

Die Gabel kann in ihrem der Schraube oder Mutter zugekehrten Bereich abgekröpft ausgebildet sein. Da die Gabel in der Regel als Stanzteil hergestellt wird, ist diese Verformung leicht herbeizuführen, und die Gabel erhält somit eine verbesserte Stabilität trotz Verwendung dünnwandigen Materials.

Die Gabel kann in ihrem der Schraube oder Mutter abgekehrten vorderen Bereich eine mit einem Kragen versehene Durchbrechung aufweisen. Diese Durchbrechung kann randoffen oder randgeschlossen ausgebildet sein. Durch den Kragen wird einen längere Kontaktfläche zu dem Absteckstift und damit eine bessere Führung erzielt.

Die Erfindung wird anhand bevorzugter Ausführungsbeispiele weiter erläutert und beschrieben. Es zeigen:
- Figur 1: eine Schnittdarstellung einer Ausführungsform des Luftfederventils mit Feineinstellung,
- Figur 2: einen Schnitt nach der Linie II-II in Figur 1,
- Figur 3: eine Draufsicht auf den Gehäuseabschnitt mit einer Gabel gemäß Figur 1 und
- Figur 4: eine Schnittdarstellung einer weiteren Ausführungsform der verstellbaren Gabel.

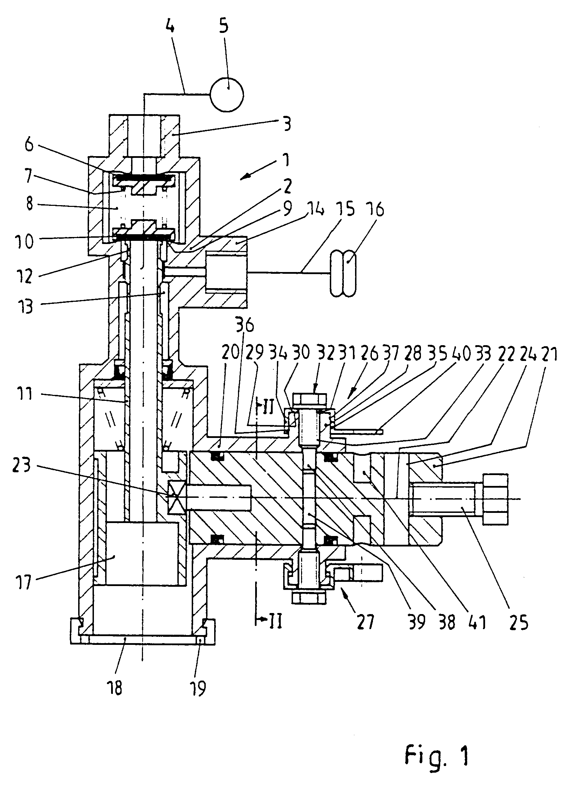

Das in Figur 1 dargestellte Luftfederventil 1 zeigt die für die vorliegende Erfindung sekundären Teile in bekannter Bauweise in einem Halbschnitt. Es ist ein Gehäuse 2 vorgesehen, welches einen Anschlußstutzen 3 aufweist, an dem eine Vorratsleitung 4 endet, die mit einem Druckluftbehälter 5 in Verbindung steht. Eine Ventilplatte 6 bildet mit einer Feder 7 ein Rückschlagventil, welches am Eingang in eine Vorratskammer 8 vorgesehen ist. Ein vorspringender Rand 9 des Gehäuses 2 bildet mit einem Doppelventilkörper 10 ein Einlaßventil 9, 10. Im Gehäuse 2 ist ein Stößel 11 dichtend verschiebbar gelagert. Der Stößel ist zu Entlüftungszwecken hohl ausgebildet und bildet mit seinem oberen Rand 12 in Verbindung mit dem Doppelventilkörper 10 ein Auslaßventil 10, 12. Zwischen den Rändern 9 und 12 ist im Gehäuse eine Belüftungskammer 13 gebildet, an die über einen Anschlußstutzen 14 eine Leitung 15 angeschlossen ist, die zu einem oder mehreren Luftfederbälgen 16 führt.

Im unteren Bereich besitzt das Gehäuse 2 des Luftfederventils 1 eine Entlüftungsöffnung 17, die mit einem Flatterventil 18 abgedeckt ist. Das Flatterventil 18 besteht in der Regel aus gummielastischem Material und weist ein oder mehrere Durchbrechungen 19 auf, durch die bei geöffnetem Auslaßventil 10, 12 Luft aus den Luftfederbälgen 16 in die Atmosphäre strömen kann.

Das Gehäuse 2 besitzt seitlich einen Gehäuseabschnitt 20, der im wesentlichen die Form eines Rohrstutzens hat und in seinem Innern eine Welle 21 aufnimmt, die um ihre Achse 22 verschwenkbar in dem Gehäuseabschnitt 20 gelagert ist. Die Welle 21 trägt dem Stößel 11 zugekehrt einen Exzenternocken 23, über den die Drehbewegung der Welle 21 in eine lineare Bewegung des Stößels 11 umgeformt wird. Die Welle 21 weist an ihrem aus dem Gehäuseabschnitt 20 herausschauenden Endbereich eine Querbohrung 24 für den Durchtritt eines nicht dargestellten Hebels auf, der wesentlicher Bestandteil eines mechanischen Verstelltriebes ist. Der Hebel kann von der einen oder auch von der anderen Seite in die Querbohrung 24 eingesteckt und mit einer Feststellschraube 25 fixiert werden.

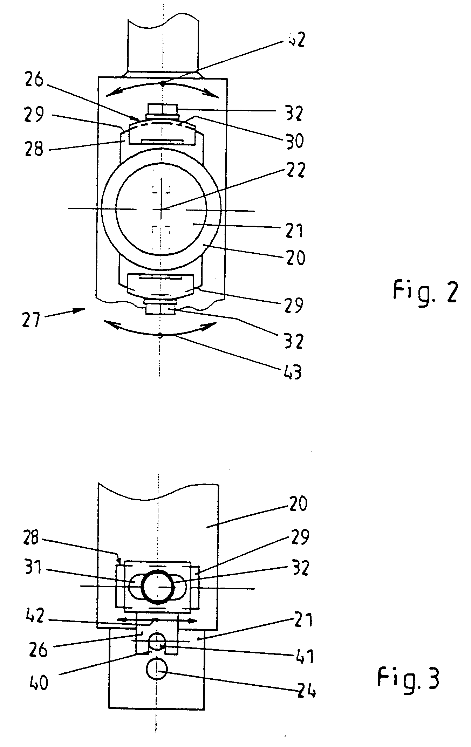

Dem Gehäuseabschnitt 20 ist eine einstellbare Gabel 26 z. B. für Linksanwendung und eine weitere Gabel 27 für Rechtsanwendung zugeordnet. Die Gabeln 26 und 27 sowie wesentliche für ihre Einstellung dienende Teile und Ausbildungen sind in doppelter Anordnung vorgesehen, weshalb im folgenden nur die Ausbildung und Anordnung der Gabel 26 beschrieben wird. Die Gabel 26 arbeitet mit einem Fortsatz 28 des Gehäuseabschnitts 20 zusammen, der sich radial zur Achse 22 nach außen und über einen gewissen Umfangsbereich (Figuren 2 und 3) erstreckt. Der Fortsatz 28 besitzt eine Zylinderfläche 29, also einen Flächenabschnitt eines Zylinders um die Achse 22. Die Gabel 26 ist mit einer zylindrischen Gegenfläche 30 versehen, die in Umfangsrichtung etwas kleiner ausgebildet ist als die Zylinderfläche 29. Die Gabel 26 weist ein Langloch 31 auf, durch welches eine Schraube 32 hindurchgreift, die in einem Gewinde 33 des Fortsatzes 28 eingeschraubt ist. Durch Anziehen der Schraube 32 kann die Gabel 26 entsprechend der Ausbildung des Langloches 31 in verschiedenen Winkellagen auf einer zylindrischen Fläche um die Achse 22 verstellt bzw. eingestellt werden. An sich genügt die zylindrische Ausbildung der Zylinderfläche 29 und die zylindrische Ausbildung der Gegenfläche 30 in Verbindung mit dem Langloch, um die Gabel 26 in verschiedenen Winkellagen um die Achse 22 herum zu führen. Die Gabel 26 kann aber auch zusätzlich noch mit Abkantungen 34 und 35 versehen sein, so daß zwischen der Gabel 26 und dem Fortsatz 28 zusätzliche Führungsflächen 36 und 37 geschaffen sind, die sich radial zur Achse 22 in Umfangsrichtung erstrecken. Die Schraube 32 kann einen Fortsatz 38 aufweisen, der einer umlaufenden Nut 39 der Welle 21 zugeordnet ist, so daß bei eingestellter Gabel 26 und festgezogener Schraube 32 der Fortsatz 38 zugleich die Welle 21 in axialer Richtung sichert.

An dem nach außen abstehenden vorderen Ende der Gabel 26 ist eine randoffene Durchbrechung 40 gebildet, die U- bzw. gabelförmig ausgebildet ist. Diese Durchbrechung 40 könnte auch als randgeschlossene Bohrung oder als langlochartiger Schlitz mit Haupterstreckungsrichtung parallel zur Achse 22 ausgebildet sein. Die Durchbrechung 40 ist einer Bohrung 41 in der Welle 21 zugeordnet und dient dazu, einen nicht dargestellten Absteckstift durch die Durchbrechung 40 hindurch in die Bohrung 41 einzuführen, so daß die Schwenkbeweglichkeit der Welle 21 damit blockiert ist. Durch Einstellung der Gabel 26 entlang einer Zylinderfläche um die Achse 22 wird die Zuordnung der betreffenden eingestellten Winkellage der Gabel 26 zu der Abschlußstellung des Ein/Auslaßventils 9, 10, 12 hergestellt, und zwar für die eine Anordnungsmöglichkeit des Hebels in der Querbohrung 24. Entsprechendes gilt für die Gabel 27 und den von der anderen Seite in die Querbohrung 24 eingesteckten Hebel.

Durch die Verstellmöglichkeit der Gabeln 26 und 27 je auf einer Zylinderfläche um die Achse 22 ergibt sich trotz verschiedener Winkellagen immer eine übereinstimmende Relativlage zwischen der Durchbrechung 40 und dem jeweiligen Absteckstift. Dies ermöglicht es, ein sehr kleines Spiel zwischen der Durchbrechung 40 und dem Absteckstift vorzusehen, so wie es an sich nur für das Einstecken oder Herausziehen des Absteckstiftes erforderlich ist. Das Spiel kann völlig beseitigt sein, und die jeweiligen Abmessungen können nach Art einer Gleitpassung ausgebildet sein, so daß der Hebel des mechanischen Verstelltriebes in einer abgesteckten Stellung exakt festliegt und nicht wackelt.

Figur 2 verdeutlicht noch einmal die Lage der beiden Gabeln 26 und 27. Die Gabel 26 ist gemäß Doppelpfeil 42 und die Gabel 27 gemäß Doppelpfeil 43 auf den Zylinderflächen 29 um die Achse 22 verstellbar.

Figur 3 zeigt eine Draufsicht auf die Gabel 26 in ihrer Anordnung am Gehäuseabschnitt 20.

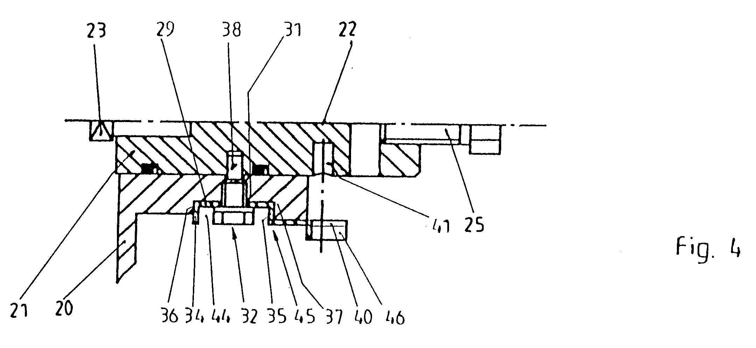

Figur 4 zeigt eine weitere Ausführungsmöglichkeit. Die Zylinderfläche 29 des Gehäuseabschnitts 20 ist hier nicht auf einem radial nach außen weisenden Fortsatz, sondern innerhalb einer Vertiefung 44 vorgesehen. Die Gabel 45 ist hier umgekehrt abgekröpft. Sie besitzt aber auch hier in entsprechender Anordnung eine Abkantung 34 und 35, ein Langloch 31 sowie Führungsflächen 36 und 37 sowie die Durchbrechung 40.

Es ist auch möglich, weder einen Fortsatz 28 noch eine Vertiefung 44 vorzusehen, sondern als Zylinderfläche 29 die zylindrische äußere Oberfläche des Gehäuseabschnitts 20 zu wählen, so daß die Gabel dann eine entsprechende sehr einfache Ausbildung erhält, deren wesentliches Merkmal in der zylinderschalenartigen Wölbung besteht. Wenn der Absteckstift im Bereich der Durchbrechung 40 auf einer radial längeren Strecke geführt werden soll, kann die Durchbrechung 40 mit einem aufgewölbten Kragen 46 versehen sein.

### BEZUGSZEICHENLISTE

- 1 -: Luftfederventil
- 2 -: Gehäuse
- 3 -: Anschlußstutzen
- 4 -: Vorratsleitung
- 5 -: Druckluftbehälter
- 6 -: Ventilplatte
- 7 -: Feder
- 8 -: Vorratskammer
- 9 -: Rand
- 10 -: Doppelventilkörper
- 11 -: Stößel
- 12 -: Rand
- 13 -: Belüftungskammer
- 14 -: Anschlußstutzen
- 15 -: Leitung
- 16 -: Luftfederbalg
- 17 -: Entlüftungsöffnung
- 18 -: Flatterventil
- 19 -: Durchbrechung
- 20 -: Gehäuseabschnitt
- 21 -: Welle
- 22 -: Achse
- 23 -: Exzenternocken
- 24 -: Querbohrung
- 25 -: Feststellschraube
- 26 -: Gabel
- 27 -: Gabel
- 28 -: Fortsatz
- 29 -: Zylinderfläche
- 30 -: Gegenfläche
- 31 -: Langloch
- 32 -: Schraube
- 33 -: Gewinde
- 34 -: Abkantung
- 35 -: Abkantung
- 36 -: Führungsfläche
- 37 -: Führungsfläche
- 38 -: Fortsatz
- 39 -: Nut
- 40 -: Durchbrechung
- 41 -: Bohrung
- 42 -: Doppelpfeil
- 43 -: Doppelpfeil
- 44 -: Vertiefung
- 45 -: Gabel
- 46 -: Kragen

## Patentansprüche

1. Luftfederventil mit Feineinstellung, insbesondere für Nutzfahrzeuge, mit einem Gehäuse (2), in dem ein Stößel (11) dichtend verschiebbar geführt ist, der ein Ein/Auslaßventil (9, 10, 12) betätigt, wobei ein lastabhängiger Stelltrieb mit Hebel, Welle (21), und Exzenternocken (23) um eine Achse (22) verschwenkbar ist und der Verstellung des Stößels (11) dient, und mit mindestens einer auf die Abschlußstellung des Ein/Auslaßventils (9, 10, 12) einstellbaren Gabel (26, 27, 45) zur Festlegung des Hebels in im wesentlichen horizontaler Position, die mit einer Schraube (32) oder Mutter relativ zu einem die Welle (21) umgebenden Gehäuseabschnitt (20) fixierbar ist, **dadurch gekennzeichnet**, daß der Gehäuseabschnitt (20) relativ zu der Achse (22) der Welle (21) eine Zylinderfläche (29) aufweist, daß die Gabel (26, 27, 45) eine auf die Zylinderfläche (29) abgestimmte zylindrische Gegenfläche (30) besitzt, und daß die Gabel (26, 27, 45) mit ihrer Gegenfläche (30) an der Zylinderfläche (29) anliegend in unterschiedlichen Winkellagen um die Achse (22) der Welle (21) vermittels der Schraube (32) oder Mutter fixierbar ist.

2. Luftfederventil nach Anspruch 1, **dadurch gekennzeichnet**, daß die Zylinderfläche (29) an einem am Gehäuseabschnitt (20) radial zur Achse (22) nach außen vorspringenden Fortsatz (28) vorgesehen ist.

3. Luftfederventil nach Anspruch 1, **dadurch gekennzeichnet**, daß die Zylinderfläche (29) an einer am Gehäuseabschnitt (20) radial zur Achse (22) nach innen einspringenden Vertiefung (44) vorgesehen ist.

4. Luftfederventil nach Anspruch 2 oder 3, **dadurch gekennzeichnet**, daß die Gabel (26, 27, 45) Führungsflächen (36, 37) aufweist, die sich radial in Umfangsrichtung um die Achse (22) erstrecken.

5. Luftfederventil nach Anspruch 4, **dadurch gekennzeichnet**, daß die Gabel (26, 27, 45) ein parallel zu den Führungsflächen (36, 37) verlaufendes Langloch (31) aufweist.

6. Luftfederventil nach Anspruch 1, **dadurch gekennzeichnet**, daß die zur Fixierung der Gabel (26, 27, 45) dienende Schraube (32) einen radial nach innen reichenden Fortsatz (38) und die um die Achse (22) verschwenkbare Welle (21) eine umlaufende Nut (39) aufweisen.

7. Luftfederventil nach Anspruch 1 bis 6, **dadurch gekennzeichnet**, daß die Gabel (26, 27, 45) in ihrem der Schraube (32) oder Mutter zugekehrten Bereich abgekröpft ausgebildet ist.

8. Luftfederventil nach Anspruch 7, **dadurch gekennzeichnet**, daß die Gabel (26, 27, 45) in ihrem der Schraube (32) oder Mutter abgekehrten vorderen Bereich eine mit einem Kragen (46) versehene Duchbrechung (40) aufweist.

## Claims

1. Leveling valve having a precision adjustment device, especially for utility vehicles, including a housing (2) in which a tappet (11) is sealingly and movably guided, the tappet (11) actuating an inlet/outlet valve (9, 10, 12), whereby a load-controlled control element including a lever, a shaft (21) and an eccentric cam (23) is pivotable about an axis (22) and serves to adjust the tappet (11), and at least one fork (26, 27, 45) being adjustable to the closing position of the inlet/outlet valve (9, 10, 12) to fix the lever in a substantially horizontal position being fixable with respect to a housing branch (20) surrounding the shaft (21) by a screw (32) or by a nut, **characterized in** that the housing branch (20) includes a cylindrical surface (29) with respect to the axis (22) of the shaft (21), that the fork (26, 27, 45) includes a cylindrical opposite surface (30) being coordinated with the cylindrical surface (29), and that the fork (26, 27, 45) with its cylindrical opposite surface (30) is attachable to the cylindrical surface (29) in different angle positions about the axis (22) of the shaft (21) by a screw (32) or by a nut.

2. Leveling valve according to claim 1, **characterized in** that the cylindrical surface (29) is provided on a projection (28) extending radially away from the axis (22) of the housing branch (20).

3. Leveling valve according to claim 1, **characterized in** that the cylindrical surface (29) is provided on a recess (44) extending radially to the inside of the housing branch (20).

4. Leveling valve according to claim 2 or 3, **characterized in** that the fork (26, 27, 45) has guiding surface (36, 37) which extend radially in the direction of the circumference about the axis (22).

5. Leveling valve according to claim 4, **characterized in** that the fork (26, 27, 45) includes an elongated hole (31) extending parallel to the guiding surfaces (36, 37).

6. Leveling valve according to claim 1, **characterized in** that the screw (32) serving to attach the fork (26, 27, 45) has an extension (38) extending radially towards the inside, and that the shaft (21) being pivotable about the axis (22) includes a circumferential groove (39).

7. Leveling valve according to claim 1, **characterized in** that the fork (26, 27, 45) is bend at right angles in its region facing the screw (32) or the nut.

8. Leveling valve according to claim 7, **characterized in** that the fork (26, 27, 45) includes an opening (40) with a collar (46) being located in its front region facing away from the screw (32) or from the nut.

## Revendications

1. Soupape pour suspension pneumatique à réglage fin, en particulier pour véhicules utilitaires comportant un boîtier (2), dans lequel un poussoir (11) est monté coulissant de manière étanche et actionne une soupape d'admission/d'échappement (9, 10, 12), un mécanisme de réglage en fonction de la charge, avec levier, arbre (21) et came d'excentrique (23), pouvant pivoter autour d'un axe (22) et servant au déplacement du poussoir (11), et comportant au moins une fourche (26, 27, 45), réglable sur la position de fermeture de la soupape d'admission/d'échappement (9, 10, 12), pour fixer le levier dans le position sensiblement horizontale, qui peut être indexée à l'aide d'une vis (32) ou d'un écrou par rapport à une partie de boîtier (20) entourant l'arbre (21), caractérisée en ce que la partie de boîtier (20) présente une surface cylindrique (29) par rapport à l'axe (22) de l'arbre (21), en ce que la fourche (26, 27, 45) possède une contre-surface (30) cylindrique adaptée à la surface cylindrique (29) et en ce que la fourche (26, 27, 45), s'appliquant par sa contre-surface (30) contre la surface cylindrique (29), peut être fixée dans différentes positions angulaires autour de l'axe (22) de l'arbre (21), au moyen de la vis (32) ou de l'écrou.

2. Soupape pour suspension pneumatique selon la revendication 1, caractérisée en ce que la surface cylindrique (29) est prévue sur un appendice (28) faisant saillie vers l'extérieur radialement par rapport à l'axe (22), sur la partie de boîtier (20).

3. Soupape pour suspension pneumatique selon la revendication 1, caractérisée en ce que la surface cylindrique (29) est prévue sur un renfoncement (44) pénétrant vers l'intérieur radialement par rapport à l'axe (22), dans la partie de boîtier (20).

4. Soupape pour suspension pneumatique selon la revendication 2 ou 3, caractérisée en ce que la fourche (26, 27, 45) présente des surfaces de guidage (36, 37) qui s'étendent radialement dans la direction périphérique autour de l'axe (22).

5. Soupape pour suspension pneumatique selon la revendication 4, caractérisée en ce que la fourche (26, 27, 45) présente un trou oblong (31) s'étendant parallèlement aux surfaces de guidage (36, 37).

6. Soupape pour suspension pneumatique selon la revendication 1, caractérisée en ce que la vis (32), servant à la fixation de la fourche (26, 27, 45), présente un prolongement (38) s'étendant radialement vers l'intérieur, et en ce que l'arbre (21), qui peut tourner autour de l'axe (22), présente une rainure périphérique (39).

7. Soupape pour suspension pneumatique selon les revendications 1 à 6, caractérisée en ce que la fourche (26, 27, 45) est coudée dans sa zone adjacente à la vis (32) ou l'écrou.

8. Soupape pour suspension pneumatique selon la revendication 7, caractérisée en ce que la fourche (26, 27, 45) présente, dans sa zone avant tournée à l'opposé de la vis (32) ou de l'écrou, une découpure (40) pourvue d'un collet (46).
